# EUROPÄISCHE PATENTSCHRIFT

(11) **EP 3 774 980 B1**
(45) Veröffentlichungstag und Bekanntmachung des Hinweises auf die Patenterteilung: **01.05.2024**
(21) Anmeldenummer: 19716904.8
(22) Anmeldetag: 12.04.2019
(51) Int. Cl.: C08G 18/72, C08J 5/04, C08G 18/73, C08G 18/75, C08G 18/79, C08G 18/02, C08G 18/18, C08G 18/28

(54) **ADDUKTE VON AMINKATALYSATOREN ZUR HERSTELLUNG VON ISOCYANURATPOLYMEREN**
ADDUCTS OF AMINE CATALYSTS FOR THE PRODUCTION OF ISOCYANURATE POLYMERS
PRODUITS D'ADDITION DE CATALYSEURS D'AMINE DESTINÉS À LA PRODUCTION DE POLYMÈRES À MOTIFS ISOCYANURATES

(30) Priorität: 13.04.2018 EP 18167251
(43) Veröffentlichungstag der Anmeldung: 17.02.2021
(73) Patentinhaber: Covestro Deutschland AG, 51373 Leverkusen (DE)
(72) Erfinder: MEISENHEIMER, Richard Daniel Matthias, 51065 Köln (DE); HEINZ, Paul, 51375 Leverkusen (DE); ACHTEN, Dirk, 51375 Leverkusen (DE); STERN, Frank-Stefan, 51427 Bergisch Gladbach (DE)
(74) Vertreter: Levpat
(86) Internationale Anmeldenummer: PCT/EP2019/059482
(87) Internationale Veröffentlichungsnummer: WO 2019/197639

(56) Entgegenhaltungen:
- WO-A1-2018/054776
- WO-A1-2019/096813
- US-A- 4 026 840
- US-A- 4 122 038
- US-A1- 2008 090 943

## Beschreibung

Die vorliegende Erfindung betrifft die Verwendung tertiärer Amine als Katalysatoren für die Vernetzung aliphatisch und/oder cycloaliphatisch gebundener Isocyanatgruppen untereinander. Die erfindungsgemäßen Katalysatoren haben den besonderen Vorteil, dass sie thermolatent sind.

Die Herstellung von Isocyanuratkunststoffen durch die Vernetzung aliphatisch oder cycloaliphatisch gebundener Isocyanatgruppen untereinander, d.h. ohne Beteiligung von Thiol-, Hydroxyl- oder Aminogruppen ist grundsätzlich bekannt. Es ist auch bereits beschrieben, dass derartige Materialien als Polymermatrix für Verbundwerkstoffe einsetzbar sind.

Die meisten der für die in der Technik weit verbreitete Trimerisierungsreaktion von aromatischen Isocyanaten zu PIR (Polyisocyanurathartschäumen) beschriebenen Katalysatoren eignen sich nicht für die Katalyse der Trimerisierungsreaktion der viel weniger reaktiven aliphatischen Isocyanate. Entweder sind die in der Literatur beschriebenen Katalysatoren sind zu wenig reaktiv und benötigen lange Aushärtungszeiten bei hohen Temperaturen oder sie sind zu reaktiv und erlauben keinen kontrollierten Reaktionsverlauf.

Während aromatische Isocyanate zu einem großen Anteil zu Hartschäumen und Weichschäumen umgesetzt werden, wo eine schnell einsetzende Reaktion gewünscht ist, werden aliphatische Isocyanate hauptsächlich in Lacken und Klebstoffen sowie in Vergussmassen als Vernetzerkomponente zur Herstellung von Polyurethanen eingesetzt. Bei diesen Anwendungen sind Katalysatoren, die eine lange Topfzeit des Reaktionsgemisches und eine kurze Reaktionszeit bei erhöhter Temperatur ermöglichen, bevorzugt. Lange Topfzeiten sind bei aromatischen Isocyanaten wegen ihrer hohen Reaktivität nur über den Einsatz zusätzlicher Inhibitoren zur erreichen.

Das Bedürfnis nach Katalysatoren mit langer Topfzeit bei Raumtemperatur und hoher Geschwindigkeit nach Erwärmen besteht insbesondere bei der Herstellung von Verbundwerkstoffen mit einer Polymermatrix aus trimerisierten aliphatischen Isocyanaten durch Pultrusion. Dieses Verfahren wird vielfach zur kontinuierlichen und damit besonders wirtschaftlichen Herstellung von Verbundwerkstoffen verwendet.

Die Herstellung von Faserverbundwerkstoffen basierend auf aliphatischen oder cycloaliphatischen Polyiisocyanaten mit hohem Verhältnis von Isocyanatgruppen zu Hydroxyl-, Thiol und Aminogruppen im Reaktionsgemisch durch Pultrusion wurde noch nicht öffentlich beschrieben. Ein solches Verfahren erfordert einen Katalysator, der bei Raumtemperatur nur geringe - im Idealfall gar keine - katalytische Aktivität zeigt und nach Temperaturerhöhung eine sehr schnelle Vernetzung der Isocyanatgruppen im Reaktionsgemisch bewirkt. Die geringe Aktivität bei Raumtemperatur ermöglicht eine lange Lagerung eines Reaktionsgemisches aus Polyisocyanat und Katalysator, ohne dass die einsetzende Vernetzung der Polyisocyanate zu einem Viskositätsanstieg führt, der eine weitere Verarbeitung erschwert oder unmöglich macht. Gleichzeitig ist eine hohe katalytische Aktivität nach einer Aktivierung des Katalysators wünschenswert, um hohe Fertigungsgeschwindigkeiten zu erzielen. Da die Aktivierung der in den konventionellen Systemen verwendeten Katalysatoren durch Erwärmung erfolgt, sollte ein Katalysator, der Isocyanatgruppen vernetzt, ebenfalls durch Erwärmen aktivierbar sein. Damit stünde ein System aus Katalysator und (cyclo)aliphatischem Polyisocyanat zur Verfügung, das in den konventionell für die Pultrusion eingesetzten Maschinen ohne großen Anpassungsbedarf der eingesetzten Maschinen verarbeitet werden kann.

Bereits bekannt ist die Herstellung von Verbundwerkstoffen mit Polymermatrizes, die ungesättigtem Polyesterharz (UP-Harz) oder Epoxidharzen aufgebaut sind. Auch das Pultrusionsverfahren ist zur Herstellung dieser Werkstoffe bekannt. Nachteilig am (UP-Harz) ist die starke Geruchsentwicklung durch das enthaltene Styrol. Weiterhin sind die mechanischen Eigenschaften, wie beispielsweise der Zug-E-Modul oder die Biegefestigkeit in der Regel nicht ausreichend stark ausgeprägt. Zudem besitzt UP-Harz eine sehr geringe adhäsive Eigenschaften. Nachteilig an Epoxidharzen ist, dass das Verhältnis von Epoxidharz und Härter sehr genau eingehalten werden muss, da Abweichungen starken Einfluss auf die Materialeigenschaften haben. Beide Materialien sind nicht dauerhaft wetterstabil.

Erstmals wurde ein Pultrusionsverfahren, das auf der Vernetzung von aliphatischen Polyisocyanaten beruht, in der nachveröffentlichten Patentanmeldung WO 2018/054776 beschrieben. Dort ist auch ein geeignetes Katalysatorsystem offenbart, das sich vom in der vorliegenden Anmeldung offenbarten Katalysator unterscheidet. Die in WO 2018/054776 beschriebene Verwendung von Polyethylenglykol führt aber zu schlechteren mechanischen Eigenschaften der Polymermatrix. Außerdem sind auch für andere Anwendungen als die Pultrusion Systeme wünschenswert, die eine noch längere Topfzeit haben und trotzdem bei geringeren Temperaturen ausgehärtet werden können als das bekannte System. Auch sollte die initiale Viskosität des Harzes möglichst niedrig liegen, um die Verarbeitung zu erleichtern.

US 4,026,840 beschreibt die Verwendung tertiärer Hydroxyalkylamine zur Herstellung von Polyiurethanschäumen basierend auf aromatischen Polyisocyanaten. Es wurde nicht gezeigt, dass derartige Verbindungen als thermolatente Katalysatoren für die Trimerisierung aliphatischer Polyisocyanate geeignet sind.

US 2008/0090943 beschreibt die Verarbeitung von Epoxidharzen, aber keine Trimerisierung von Polyisocyanaten. Hierbei wurden tertiäre Amine, die sich durch die obligatorische Anwesenheit von Ketogruppen von den erfindungsgemäß verwendeten Katalysatoren unterscheiden, als Ko-Katalysatoren verwendet.

US 4,122,038 beschreibt die Verwendung tertiärer Hydroxyalkylamine zur Herstellung von Polyurethanschäumen basierend auf aromatischen Polyisocyanaten, nicht aber die Herstellung von Polyisocyanuratkunststoffen basierend auf aliphatischen Polyisocyanaten.

Diese Aufgabe wird durch die Ausführungsformen der vorliegenden Erfindung gelöst, die in den Patentansprüchen und in dieser Beschreibung offenbart werden.

Die vorliegende Erfindung betrifft gemäß Anspruch 1 eine polymerisierbare Zusammensetzung enthaltend
a) wenigstens ein Polyisocyanat mit Isocyanatgruppen ausgewählt aus der Gruppe bestehend aus aliphatisch, cycloaliphatisch, araliphatisch und aromatisch gebundenen Isocyanatgruppen; und
b) wenigstens eine Verbindung gemäß Formel (I) 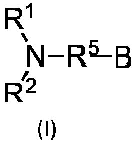
   Wobei R¹ und R² unabhängig voneinander ausgewählt sind aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl;
   R⁵ ausgewählt ist aus der Gruppe bestehend aus Propylen, Butylen, Pentylen und einem Rest gemäß Formel (II), bevorzugt aus Butylen und dem Rest gemäß Formel (II); 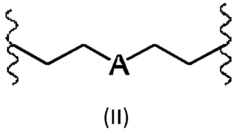
   Wobei A in Formel (II)ausgewählt ist aus der Gruppe bestehend aus O, S und NR³, wobei R³ ausgewählt ist aus der Gruppe bestehend aus Wasserstoff, Methyl, Ethyl, Propyl, Isopropyl, Butyl und Isobutyl, bevorzugt Wasserstoff und Methyl; und
   B unabhängig von A ausgewählt ist aus der Gruppe bestehend aus OH, SH NHR⁴ und NH₂, wobei R⁴ ausgewählt ist aus der Gruppe bestehend aus Methy, Ethyl und Propyl, bevorzugt Methyl,
   mit der Maßgabe, dass N,N,N'-Trimethylaminoethyl-ethanolamin vom Schutzbereich der Patentansprüche ausgeschlossen ist..
   Wenn R⁵ ein Rest gemäß Formel (II) ist, ergibt sich eine Verbindung gemäß Formel (III)

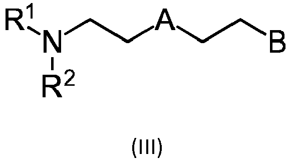

Das Verhältnis von Isocyanatgruppen zu mit Isocyanatgruppen reaktiven Gruppen in der polymerisierbaren Zusammensetzung beträgt wenigstens 2:1 und wenigstens 80 % der in der polymerisierbaren Zusammensetzung enthaltenen Isocyanatgruppen sind aliphatisch, cycloaliphatisch oder araliphatisch gebunden.

Bevorzugt sind wenigstens 90 %, stärker bevorzugt wenigstens 95 % und besonders bevorzugt wenigstens 98 % der in der polymerisierbaren Zusammensetzung enthaltenen Isocyanatgruppen aliphatisch, araliphatisch und/oder cycloaliphatisch gebunden.

Eine "polymerisierbare Zusammensetzung" ist eine Zusammensetzung, welche wenigstens die oben definierten Komponenten enthält und durch Vernetzung der in der Zusammensetzung enthaltenen freien Isocyanatgruppen zu einem Polymer ausgehärtet werden kann. Hierbei wirkt die Verbindung gemäß Formel (I) als Katalysator, der die Vernetzung der Isocyanatgruppen bewirkt.

Diese Vernetzung von wenigstens zwei Isocyanatgruppen erfolgt vorzugsweise unter Ausbildung von Isocyanurat- und/oder Uretdiongruppen. Es entstehen überwiegend Isocyanuratgruppen und Uretdiongruppen stellen nur ein Nebenprodukt dar. Soweit Isocyanuratgruppen gebildet werden, werden vorzugsweise pro gebildeter Isocyanuratgruppe drei Isocyanatgruppen vernetzt.

Das Mengenverhältnis zwischen der Verbindung gemäß Formel (I) auf der einen Seite zu dem wenigstens einen Polyisocyanat mit Isocyanatgruppen ausgewählt aus der Gruppe bestehend aus aliphatisch, cycloaliphatisch und araliphatisch gebundenen Isocyanatgruppen auf der anderen Seite ist so gewählt, dass bei Temperaturen zwischen 80 °C und 250 °C wenigstens 80 % der vorliegenden freien Isocyanatgruppen innerhalb von höchstens einer Stunde vernetzt werden können. Diese Bedingung wird vorzugsweise dann erfüllt, wenn das Gewichtsverhältnis zwischen der Verbindung nach Formel (I) und der Gesamtheit der in der polymerisierbaren Zusammensetzung enthaltenen Polyisocyanate zwischen 1: 1000 und 1 : 20. Stärker bevorzugt zwischen 1 : 500 und 1 : 20, noch stärker bevorzugt zwischen 1 : 400 und 1:20 und am stärksten bevorzugt zwischen 1 : 300 und 1 : 20 liegt.

Bevorzugt beträgt das Verhältnis von Isocyanatgruppen zu mit Isocyanatgruppen reaktiven Gruppen in der polymerisierbaren Zusammensetzung wenigstens 5:1 und stärker bevorzugt wenigstens 10:1. Unter "mit Isocyanat reaktiven Gruppen" werden Hydroxyl-, Thiol und Aminogruppen verstanden.

In einer bevorzugten Ausführungsform der vorliegenden Erfindung enthält die polymerisierbare Zusammensetzung a) wenigstens ein Polyisocyanat mit cycloaliphatisch gebundenen Isocyanatgruppen und/oder wenigstens ein Polyisocyanat mit araliphatisch gebundenen Isocyanatgruppen und b) wenigstens eine Verbindung gemäß Formel (I) wie oben definiert.

### Polyisocyanat

Unter einem "Polyisocyanat" wird in der vorliegenden Anmeldung jede Verbindung verstanden, die im Durchschnitt wenigstens 1,8, bevorzugt wenigstens 2,0 und besonders bevorzugt 2,1 Isocyanatgruppen aufweist. Hingegen wird unter einem "Monoisocyanat" eine Verbindung mit durchschnittlich höchstens 1,6 Isocyanatgruppen pro Molekül, insbesondere nur mit einer Isocyanatgruppe pro Molekül verstanden.

Der Begriff "Polyisocyanate" bezeichnet in dieser Anmeldung monomere und/oder oligomere Polyisocyanate gleichermaßen. Zum Verständnis vieler Aspekte der Erfindung ist es jedoch wichtig, zwischen monomeren Diisocyanaten und oligomeren Polyisocyanaten zu unterscheiden. Wenn in dieser Anmeldung von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

### Oligomere Isocyanate

Oligomere Isocyanate werden durch "Modifizierung" eines monomeren Isocyanats erhalten. "Modifizierung" bedeutet dabei die Reaktion monomerer Isocyanate zu oligomeren Isocyanaten mit Uretdion-, Isocyanurat-, Allophanat-, Biuret-, Iminooxadiazindion- und/oder Oxadiazintrionstruktur. Als Edukte für die Herstellung oligomerer Isocyanate werden bevorzugt Diisocyanate verwendet.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

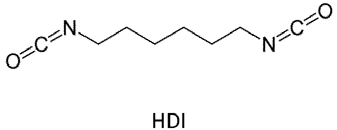

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

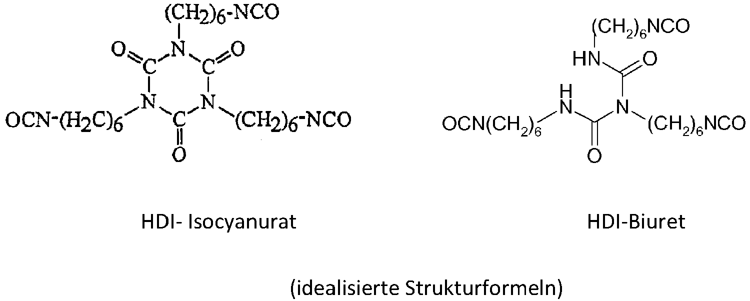

Herstellverfahren für oligomere Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP A 0 339 396 und EP-A 0 798 299 beschrieben.

Besonders bevorzugt werden die weiter unten in dieser Anmeldung definierten monomeren Isocyanate als Ausgangsstoffe der Modifizierung verwendet.

Die erfindungsgemäße polymerisierbare Zusammensetzung kann oligomere und polymere Polyisocyanate in beliebigen Mischungsverhältnissen enthalten. Grundsätzlich sind aus Gründen der Arbeitssicherheit polymerisierbare Zusammensetzungen bevorzugt, deren Polyisocyanatkomponente, d.h. die Gesamtheit aller in besagter Zusammensetzung enthaltenen Polyisocyanate, zu wenigstens 90 Gew.-%, bevorzugt wenigstens 95 Gew.-% und stärker bevorzugt wenigstens 98 Gew.-% aus oligomeren Polyisocyanaten bestehen. Soweit gewünscht, beispielsweise zur Absenkung der Viskosität der polymerisierbaren Zusammensetzung, kann die Polyisocyanatkomponente aber auch bis 20 Gew.-% oder bevorzugt bis zu 50 Gew.-% monomere Polyisocyanate enthalten.

### Isocyanate mit aliphatisch gebunden Isocyanatgruppen

Bei einem Isocyanat mit aliphatisch gebundenen Isocyanatgruppen sind alle Isocyanatgruppen an ein Kohlenstoffatom gebunden, das Teil einer offenen Kohlenstoffkette ist. Diese kann an einer oder mehreren Stellen ungesättigt sein. Die aliphatisch gebundene Isocyanatgruppe oder - im Fall von Polyisocyanaten - die aliphatisch gebundenen Isocyanatgruppen sind vorzugsweise an den terminalen Kohlenstoffatomen der Kohlenstoffkette gebunden.

Erfindungsgemäß besonders geeignete Polyisocyanate mit aliphatisch gebundenen Isocyanatgruppen sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan.

### Isocyanate mit cycloaliphatisch gebunden Isocyanatgruppen

Bei einem Isocyanat mit cycloaliphatisch gebundenen Isocyanatgruppen sind alle Isocyanatgruppen an Kohlenstoffatome gebunden, die Teil eines geschlossenen Rings aus Kohlenstoffatomen sind. Dieser Ring kann an einer oder mehreren Stellen ungesättigt sein, solange er durch das Vorliegen von Doppelbindungen keinen aromatischen Charakter erhält.

Erfindungsgemäß besonders geeignete Polyisocyanate mit cycloaliphatisch gebundenen Isocyanatgruppen sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan Isophorondiisocyanat; (IPDI), 1-Isocyanato-1-methyl-4(3)-isocyanatomethylcyclohexan, 2,4'- und 4,4'-Diisocyanatodicyclohexylmethan(H12MDI), 1,3-und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyl-dicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan .

### Isocyanate mit araliphatisch gebunden Isocyanatgruppen

Bei einem Isocyanat mit araliphatisch gebundenen Isocyanatgruppen sind alle Isocyanatgruppen an Methylenreste gebunden, der ihrerseits an einen aromatischen Ring gebunden sind.

Erfindungsgemäß besonders geeignete Polyisocyanate mit araliphatisch gebundenen Isocyanatgruppen sind 1,3- und 1,4-Bis-(isocyanatomethyl)benzol (Xylendiisocyanat; XDI), 1,3- und 1,4-Bis(1-isocyanato-1-methyl,ethyl)-benzol (TMXDI) und Bis(4-(1-isocyanato-1-methylethyl)phenyl)-carbonat.

Erfindungsgemäß kann die polymerisierbare Zusammensetzung beliebige Mischungen der oben genannten Isocyanate in monomerer und/oder oligomerer Form enthalten.

### Bevorzugte Varianten der Verbindung gemäß Formel (I)

In einer bevorzugten Ausführungsform der vorliegenden Erfindung ist R⁵ ein Rest gemäß Formel (II), wobei A NR³ ist und wobei R³ ausgewählt ist aus der Gruppe bestehend aus Wasserstoff, Methyl, Ethyl, Propyl, Isopropyl, Butyl und Isobutyl. Bevorzugt ist R³ Wasserstoff, Methyl oder Ethyl. Besonders bevorzugt ist R³ Methyl.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Wasserstoff, Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Wasserstoff, Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Wasserstoff, Methyl oder Ethyl. Besonders bevorzugt sind R¹ und R² Methyl. In dieser Variante ist R4 ausgewählt aus der Gruppe bestehend aus Methyl, Ethyl und Propyl. Bevorzugt ist R⁴ Wasserstoff, Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer weiteren bevorzugten Ausführungsform dieser Erfindung ist R⁵ ein Rest gemäß Formel (II), wobei A Sauerstoff ist.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Wasserstoff, Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Wasserstoff, Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. Bevorzugt ist R⁴ Wasserstoff, Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In noch einer weiteren bevorzugten Ausführungsform dieser Erfindung ist R⁵ ein Rest gemäß Formel (II), wobei A Schwefel ist.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Wasserstoff, Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Wasserstoff, Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. Bevorzugt ist R⁴ Wasserstoff, Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Wasserstoff, Methyl oder Ethyl. Besonders bevorzugt sind R¹ und R² Methyl.

In noch einer weiteren bevorzugten Ausführungsform dieser Erfindung ist R⁵ ein Butylenrest.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander H, Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander H, Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. Bevorzugt ist R⁴ H, Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander H, Methyl oder Ethyl. Besonders bevorzugt sind R¹ und R² Methyl.

### Isocyanat mit aromatisch gebundener Isocyanatgruppe

Bei einem Isocyanat mit aromatisch gebundener Isocyanatgruppe sind alle Isocyanatgruppen direkt an Kohlenstoffatome gebunden, die Teil eines aromatischen Ringes sind.

Erfindungsgemäß besonders geeignete Isocyanate mit aromatisch gebundenen Isocyanatgruppen sind 2,4- und 2,6-Diisocyanattoluol (TDI), 2,4'- und 4,4'-Diisocyanatodiphenylmethan (MDI) und 1,5-Diisocyanatonaphthalin.

### Kit

Die vorliegende Erfindung betrifft gemäß Anspuch 10 ein Kit enthaltend
a) wenigstens ein Polyisocyanat mit Isocyanatgruppen ausgewählt aus der Gruppe bestehend aus aliphatisch, cycloaliphatisch, araliphatisch und aromatisch gebundenen Isocyanatgruppen; und
b) wenigstens eine Verbindung gemäß Formel (I); 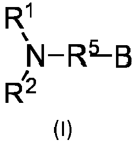
wobei wenigstens 80 % der in der polymerisierbaren Zusammensetzung enthaltenen Isocyanatgruppen aliphatisch, cycloaliphatisch oder araliphatisch gebunden sind.

Es ist in dieser Ausführungsform bevorzugt, dass wenigstens 90 %, stärker bevorzugt wenigstens 95 % und besonders bevorzugt wenigstens 98 % der im Polyisocyanat enthaltenen Isocyanatgruppen aliphatisch, araliphatisch und/oder cycloaliphatisch gebunden sind.

Die Reste der Verbindung gemäß Formel (I) wurden weiter oben in dieser Anmeldung definiert.

Das Vorliegen der beiden Komponenten als Kit bedeutet, dass beide Komponenten gemeinsam, aber in getrennten Behältnissen vorliegen. Das Kit enthält in einer bevorzugten Ausführungsform weiterhin eine Bedienungsanleitung, welche die erfindungsgemäße Verwendung beschreibt. Vorzugsweise enthält das Kit die Komponente b) in einer Menge, welche geeignet ist, wenigstens 80 % der Isocyanatgruppen, die in der im Kit enthaltenen Komponente a) vorliegen, bei einer Temperatur zwischen 80 °C bis 250 °C in höchstens 10 Minuten zu vernetzen.

### Verwendung

Die vorliegende Erfindung betrifft gemäß Anspruch 7 die Verwendung wenigstens einer Verbindung gemäß Formel (I) wie oben definiert 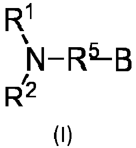 als Katalysator zur Vernetzung von wenigstens zwei aliphatisch und/oder cycloaliphatisch gebundenen Isocyanatgruppen.

Ganz besonders bevorzugt werden in wenigstens einer Verbindung ausgewählt aus der Gruppe bestehend aus HDI, PDI, IPDI, oligomerisiertem HDI, oligomerisiertem PDI und oligomerisiertem IPDI enthaltene Isocyanatgruppen miteinander vernetzt. Die erfindungsgemäße Verwendung führt bevorzugt zu einem hochvernetzten Polymer. Im Sinne der Erfindung werden unter chemisch hochvernetzten Polymeren solche verstanden, die eine mittlere chemische Netzbogenlänge Mc von höchstens 1000 g/mol, bevorzugt höchstens 500 g/mol , besonders bevorzugt höchstens 400 g/mol und ganz besonders bevorzugt höchstens 300 g/mol haben. Als mittlere Netzbogenlänge ist dabei die zahlenmittlere Molmasse zwischen den Netzknoten in einem Polymernetzwerk definiert.

Die mittlere Netzbogenlänge, sowie auch die Vernetzungsdichte kann dabei über Quellungsmessungen nach der Methode von HERMANS-FLORY-WALL in geeigneten Lösungsmitteln oder über Messung des Elastizitätsmoduls in der Schmelze im linear-elastischen Bereich bei niedrigen Frequenzen berechnet werden, siehe auch John d. Ferry: Viscoelastic properties of polymers 3rd Edition, 1980.

Bevorzugt wird die Netzbogenlänge über eine rheologische Messung ermittelt.

Im Sinne der Erfindung werden unter hochvernetzten Materialien auch solche verstanden die einen Speicherschubmodul in der Schmelze gemessen im linearen Bereich von wenigstens 3 ×10⁶ Pa bevorzugt wenigstens 5 ×10⁶ Pa und ganz besonders bevorzugt wenigstens 8 × 10⁶ Pa haben.

In einer besonders bevorzugten Ausführungsform wird die Verbindung gemäß Formel (I) als thermolatenter Katalysator verwendet.

Die Verwendung als thermolatenter Katalysator ist dadurch gekennzeichnet, dass der Katalysator mit dem zu vernetzenden Isocyanat vermischt wird und das dadurch entstandene Reaktionsgemisch zunächst bei einer Temperatur gelagert wird, bei der der Katalysator keine wesentliche katalytische Aktivität zeigt. Anschließend wird die Temperatur auf einen Wert erhöht, bei dem der Katalysator aktiv ist und die Vernetzungsreaktion so gestartet. Die Lagerung erfolgt bevorzugt bei Temperaturen von höchstens 40 °C, stärker bevorzugt höchstens 30 °C. Die Lagerdauer ist so bemessen, dass die Viskosität des Reaktionsgemisches in dieser Zeit um höchstens 200 % ansteigt. Bei Lagertemperaturen von 30 °C ist dies vorzugsweise ein Zeitraum von 30 Minuten bis 5 Tagen, stärker bevorzugt von 30 Minuten bis 24 Stunden. Zur Aktivierung des Katalysators wird die Temperatur auf 50 °C bis 250 °C erhöht, bevorzugt auf 80 °C bis 250 °C und stärker bevorzugt auf 120 °C bis 250 °C.

Weiterhin betrifft die vorliegende Erfindung die Verwendung einer polymerisierbaren Zusammen wie weiter oben definiert oder eines Kits wie weiter oben definiert zur Herstellung eines Polymers.

Besagtes Polymer ist vorzugsweise das Matrixmaterial eines Verbundwerkstoffs. Besonders bevorzugt ist es das Matrixmaterial eines hochgefüllten Verbundwerkstoffs.

Der Begriff "Verbundwerkstoff" ist dem Fachmann gut bekannt, grundsätzlich handelt e sich um Werkstoffe, bei denen ein Füllstoff in eine Matrix eingebettet ist. Erfindungsgemäß ist diese Matrix ein Polymer, das durch die Vernetzung der in der Polyisocyanatkomponente a) enthaltenen Isocyanatgruppen entsteht.

Der Füllstoff kann jeder dem Fachmann bekannte geeignete organische oder anorganische Füllstoff sein. Er kann jede beliebige Geometrie aufweisen. Vorzugsweise handelt es sich aber um einen faserförmigen organischen oder anorganischen Füllstoff.

Das Aspektverhältnis eines faserförmigen Füllstoffs ist größer als 1000, bevorzugt größer als 5000, stärker bevorzugt größer als 10.000 und am stärksten bevorzugt größer als 50.000 ist. Das Aspektverhältnis ist definiert als die Länge der Faser geteilt durch den Durchmesser.

Die faserförmigen Füllstoffe weisen bei Einhaltung des oben definierten Aspektverhältnisses bevorzugt eine Mindestlänge von 1 m, besonders bevorzugt 50 m und ganz besonders bevorzugt 100 m auf.

Bevorzugte anorganische Fasern sind Glasfasern, Basaltfasern, Borfasern, Keramikfasern, Whisker, Kieselsäurefasern sowie metallische Verstärkungsfasern. Bevorzugte organische Fasern sind Aramidfasern, Kohlenstofffasern, Kohlenstoffnanoröhrchen, Polyester-Fasern, Nylon-Fasern sowie Plexiglas-Fasern. Bevorzugte Naturfasern sind Flachsfasern, Hanffasern, Holzfasern, Cellulosefasern sowie Sisalfasern.

Das Verhältnis der Mengenanteile von Füllstoff und Polymermatrix im Verbundwerkstoff wird als Füllungsgrad bezeichnet. Hochgefüllte Systeme zeichnen sich durch einen Gewichtsanteil des Füllstoffs zwischen 50 Gew.-% und 90 Gew.-%, bevorzugt zwischen 60 Gew.-% und 85 Gew.-% und noch stärker bevorzugt zwischen 70 und 85 Gew.-% aus.

### Verfahren

Gemäß Anspruch 11 betrifft die vorliegende Erfindung ein Verfahren zur Herstellung eines Polymers enthaltend die Schritte
a) Vermischen wenigstens eines Polyisocyanats mit Isocyanatgruppen ausgewählt aus der Gruppe bestehend aus aliphatisch, cycloaliphatisch, aromatisch und araliphatisch gebundenen Isocyanatgruppen mit wenigstens einer Verbindung gemäß Formel (I); 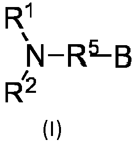
b) Aushärten der in Verfahrensschritt a) erhaltenen polymerisierbaren Zusammensetzung durch Erhöhung der Temperatur auf wenigstens 50 °C,
wobei zu Beginn des Verfahrensschritts b) das Verhältnis von Isocyanatgruppen zu mit Isocyanat reaktiven Gruppen in der polymerisierbaren Zusammensetzung wenigstens 2:1 beträgt und wenigstens 80 % der in der polymerisierbaren Zusammensetzung enthaltenen Isocyanatgruppen aliphatisch und/oder cycloaliphatisch gebunden sind.

Alle Definitionen der erfindungsgemäß einsetzbaren Polyisocyanate sowie der Reste der Verbindung gemäß Formel (I), die weiter oben in dieser Anmeldung gegeben wurden, gelten auch für diese Ausführungsformen.

Das hergestellte Polymer ist vorzugsweise hochvernetzt wie weiter oben in dieser Anmeldung definiert.

Das Vermischen der Komponenten in Verfahrensschritt a) kann mit allen dem Fachmann bekannten geeigneten Verfahren erfolgen. Der Verfahrensschritt a) wird vorzugsweise bei Temperaturen von höchstens 40 °C durchgeführt. Am Ende des Verfahrensschritts a) liegt ein Reaktionsgemisch vor, das der am Anfang dieser Patentanmeldung offenbarten polymerisierbaren Zusammensetzung entspricht. Insofern offenbart der Verfahrensschritt a) für sich alleine betrachtet ein Verfahren zur Bereitstellung der erfindungsgemäßen polymerisierbaren Zusammensetzung.

Geeignete Mengenverhältnisse der einzusetzenden Komponenten sind weiter oben in Zusammenhang mit der polymerisierbaren Zusammensetzung beschrieben.

Da die Verbindungen gemäß Formel (I) thermolatente Katalysatoren sind, wird der Verfahrensschritt b) vorzugsweise durch eine Temperaturerhöhung der polymerisierbaren Zusammensetzung eingeleitet. Die erhöhte Temperatur wird vorzugsweise auch über die Gesamtdauer des Verfahrensschrittes b) gehalten. Es ist bevorzugt, dass während des gesamten Verfahrensschrittes b) eine Temperatur von wenigstens 50 °C gehalten wird. Stärker bevorzugt liegt die Temperatur während des Verfahrensschrittes b) zwischen 50 °C und 250 °C, noch stärker bevorzugt zwischen 80 °C und 250 °C und am stärksten bevorzugt zwischen 120 °C und 250 °C.

Da die Verbindung gemäß Formel (I) bei Temperaturen bis 40 °C keine wesentliche katalytische Aktivität zeigt, kann die in Verfahrensschritt a) erhaltene polymerisierbare Zusammensetzung vor Beginn des Verfahrensschritts b) für wenigstens 30 Minuten, bevorzugt wenigstens 1 Stunde und stärker bevorzugt wenigstens 3 Stunden unter Einhaltung dieser Temperaturgrenze gelagert werden, ohne dass ihre Viskosität um mehr als 200 % ansteigt. Diese Lagerung kann bis zu 24 Stunden dauern.

Das "Aushärten" der polymerisierbaren Zusammensetzung erfolgt durch die Vernetzung der im Polyisocyanat enthaltenen Isocyanatgruppen. Hierdurch einsteht ein festes Polymernetzwerk. Da die Verbindung gemäß Formel (I) vor allem die Ausbildung von Isocyanuratgruppen katalysiert, werden vorzugsweise zu wenigstens 80 mol-% Isocyanuratgruppen ausgebildet, während die Summe an Uretdion-, Urethan-, Allophanat-, Harnstoff-, Biuret-, Iminooxadiazindion- und Oxadiazintrionstrukturen, die während des Aushärtens entstehen, unter 20 mol-% liegt.

Der Verfahrensschritt b) ist abgeschlossen, wenn aus der flüssigen polymerisierbaren Zusammensetzung ein Feststoff entstanden ist, der ohne äußere Stützen wie z.B. Gießformen seine Form behält. Dies ist vorzugsweise der Fall, wenn wenigstens 75 %, stärker bevorzugt wenigstens 80 %, noch stärker bevorzugt wenigstens 85 % und am stärksten bevorzugt wenigstens 90 % der zu Beginn des Verfahrensschrittes b) in der polymerisierbaren Zusammensetzung vorliegenden Isocyanatgruppen verbraucht sind. Bei Temperaturen zwischen 80 °C und 250 °C ist dieser Zustand vorzugsweise nach maximal 20 Minuten erreicht.

Wenn die Herstellung eines Verbundwerkstoffs beabsichtigt ist, muss die polymerisierbare Zusammensetzung zu Beginn des Verfahrensschritts b) einen Füllstoff enthalten. Dieser kann auf unterschiedlichen Wegen in die polymerisierbare Zusammensetzung eingebracht werden. Die polymerisierbare Zusammensetzung, wie sie am Ende des Verfahrensschrittes a) vorliegt, kann mit dem Füllstoff vermischt werden. Es ist aber auch möglich ein Polyisocyanat mit Isocyanatgruppen ausgewählt aus der Gruppe bestehend aus aliphatisch, cycloaliphatisch, araliphatisch und aromatisch gebundenen Isocyanatgruppen zunächst mit dem Füllstoff zu vermischen, bevor es in Verfahrensschritt a) eingesetzt wird. Geeignete Füllstoffe sind weiter oben in dieser Anmeldung beschrieben. In Verfahrensschritt b) entsteht so ein Verbundwerkstoff, bei dem das ausgehärtete Reaktionsgemisch eine Polymermatrix bildet, in die der Füllstoff eingebettet ist.

Gemäß einer bevorzugten Ausführungsform der Erfindung ist der Füllstoff ein faserförmiger Füllstoff ausgewählt aus der Gruppe bestehend aus Glasfasern, Basaltfasern, Kohlenstofffasern und Mischungen daraus. Die Fasern können einzeln vorliegen, sie können aber auch in jeder dem Fachmann bekannten Form zu Matten oder Fliesen gewebt oder gewirkt vorliegen. Vorzugsweise liegen weniger als 50 Gew.-%, stärker bevorzugt weniger als 35 Gew.-%, noch stärker bevorzugt weniger als 20 Gew.-% uns am stärksten bevorzugt weniger als 10 Gew.-% der verwendeten Fasern in Form von Matten oder Fliesen vor.

In einer besonders bevorzugten Ausführungsform der vorliegenden Erfindung ist das erfindungsgemäße Verfahren zur Herstellung eines Verbundwerkstoffs ein Pultrusionsverfahren.

Die Pultrusion ist ein kontinuierliches Herstellungsverfahren zur Fertigung von faserverstärkten Kunststoffprofilen. Der prinzipielle Aufbau einer Pultrusionsanlage besteht aus dem Faserregal, Vorrichtungen für die Faserführung, Imprägniereinrichtung, Härtungswerkzeug, reziprokarbeitenden Ziehvorrichtungen und einer Ablängeinheit.

Die Spulen der Rovings werden im Faserregal gelagert. Von dort werden die Faserrovings über Faserführungen zur Imprägniereinrichtung geführt, wo die Fasern mit dem Reaktionsgemisch aus Verfahrensschritt a) benetzt werden. Die Fasern werden in der Regel über die Faserführungen oder auch die Imprägniervorrichtung bereits an die später gewünschte Profilform ausgerichtet bzw. vorsortiert. Besonders geeignet sind Fasern, die unter Einhaltung des oben definierten Aspektverhältnisses eine Mindestlänge von wenigstens 50 m aufweisen.

Zudem können wenn erforderlich Matten, Gewebe, Gelege oder Vliese in den Prozess integriert werden, um die mechanischen Eigenschaften für die gewünschte Anwendung zu optimieren. Die Imprägnierung der Fasern mit dem Reaktionsgemisch kann durch alle dem Fachmann im Kontext des Pultrusionsverfahrens bekannten Methoden erfolgen.

Anschließend durchlaufen die harzgetränkten Fasern das formgebende Härtungswerkzeug, wo die Vernetzung der reaktiven Gruppen des Reaktionsgemisches zum Polymer (Matrix) durch erhöhte Temperatur erfolgt. Dies ist der Verfahrensschritt b) des Verfahrens. Im Anschluss folgt häufig eine Kühlstrecke, z.B. Luftkühlung, bevor das nun fertige Halbzeug durch die alternierend arbeitenden Ziehvorrichtungen ("puller") geführt wird. Diese sorgen für einen kontinuierlichen Transport des Materials im gesamten Pultrusionsprozess. Als letzter Prozessschritt wird das Material auf die gewünschte Länge zugeschnitten. Häufig kommt hier eine fliegende Säge' zum Einsatz, d.h. das die Säge mit der gleichen Geschwindigkeit mit dem Material mitfährt und dabei den Schnitt durchführt. Auf diese Art erhält man eine gerade Schnittkante und verhindert ein Aufstauen des Profils oder anhalten des Prozesses während des Sägeschritts.

Gemäß Anspruch 15 betrifft die vorliegende Patentanmeldung ein Polymer oder einen Verbundwerkstoff, erhältlich durch das oben beschriebene Verfahren. Gegenüber den in WO 2018/054776 beschriebenen Katalysatoren ergeben sich bei Einsatz der erfindungsgemäßen Katalysatoren mehrere Vorteile.

So sind die erfindungsgemäßen Aminkatalysatoren bevorzugt in bekannten aliphatischen Isocyanaten klar löslich. Die erfindungsgemäßen Aminkatalysatoren sind keine ionischen Verbindungen und müssen deshalb nicht aufwendig stabilisiert werden, um eine Trübung der Reaktionsmasse nach Polymerisation zu verhindern. Die erfindungsgemäßen Katalysatoren verschlechtern wegen Abwesenheit von ionischen Verbindungen nicht die elektrischen Eigenschaften des Reaktionsproduktes bezüglich der elektrischen Durchschlagsfestigkeit.

Die nachfolgenden Ausführungsbeispiele dienen nur dazu, die Erfindung zu illustrieren. Sie sollen den Schutzbereich der Patentansprüche in keiner Weise beschränken.

### Ausführungsbeispiele

### Allgemeine Angaben:

Alle Prozentangaben beziehen sich, sofern nicht abweichend angegeben, auf Gewichtsprozent (Gew.-%).

Die zur Zeit der Versuchsdurchführung herrschende Umgebungstemperatur von 23 °C wird als RT (Raumtemperatur) bezeichnet.

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

### Bestimmung der Phasenübergänge mittels DSC

Die Phasenübergänge wurde mittels DSC (Differential Scanning Calorimetry) mit einem Mettler DSC 12E (Mettler Toledo GmbH, Gießen, DE) entsprechend DIN EN 61006 bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 320 K/min. Die Kühlung erfolgte durch flüssigen Stickstoff. Als Spülgas wurde Stickstoff verwendet. Die angegebenen Werte basieren jeweils auf der Auswertung der 2. Aufheizkurve. Die Schmelztemperaturen Tₘ wurden aus den Temperaturen an den Maxima der Wärmeflusskurven erhalten. Die Glasübergangstemperatur T_{g} wurde aus der Temperatur bei der halben Höhe einer Glasübergangsstufe erhalten.

### Bestimmung von Infrarotspektren

Die Infrarotspektren wurden an einem mit einer ATR-Einheit ausgerüstetem FT-IR-Spektrometer der Firma Bruker gemessen.

### Ausgangsverbindungen

Polyisocyanat A1 ist ein HDI-Trimerisat (NCO-Funktionalität >3) mit einem NCO-Gehalt von 23,0 Gew.-% von der Fa. Covestro AG. Die Viskosität beträgt ca. 1200 mPa·s bei 23 °C (DIN EN ISO 3219/A.3).

Polyisocyanat A2 ein HDI-Trimerisat (NCO-Funktionalität >3) mit einem NCO-Gehalt von 23,5 Gew.-% von der Fa. Covestro AG. Die Viskosität beträgt ca. 730 mPa·s bei 23 °C (DIN EN ISO 3219/A.3).

Polyisocyanat A3 ist ein PDI-Trimerisat (NCO-Funktionalitat >3) mit einem NCO-Gehalt von 21,5 Gew.-% von der Fa. Covestro AG. Die Viskosität beträgt ca. 9500 mPa ▪ s bei 23 °C (DIN EN ISO 3219/A.3).

Polyisocyanat A4 ist ein HDI/IPDI-Polyisocyanat mit einem NCO-Gehalt von 21,0 Gew.-% von der Fa. Covestro AG. Die Viskosität beträgt ca. 22.500 mPa ▪ s bei 23 °C (DIN EN ISO 3219/A.3).

K1: N,N,N'-Trimethylaminoethyl-ethanolamin mit einer OH-Zahl von 384 mg KOH/g wurde von der Firma Huntsman Corporation bezogen.

K2: 2-(2-Dimethylaminoethoxy)ethanol mit einer OH-Zahl von 421 mg KOH/g wurde von der Firma Huntsman Corporation bezogen.

K3: Benzyldimethylamin wurde von der Firma Huntsman Corporation bezogen.

K4: 2,2'-Dimorpholindiethylether wurde von der Firma Huntsman Corporation bezogen.

K5: N-(3-Dimethylaminopropyl)-N,N-diisopropanolamin mit einer OH-Zahl von 514 mg KOH/g wurde von der Firma Huntsman Corporation bezogen.

K6: Pentamethyldiethylentriamin wurde von der Fa. Covestro AG bezogen.

K7: N,N,N'-Trimethyl-N'-hydroxyethylbisaminoethylether mit einer OH-Zahl von 295 mg KOH/g wurde von der Firma Huntsman Corporation bezogen.

K8: N,N,N',N",N"-Pentamethyldipropylentriamin wurde von der Firma Huntsman Corporation bezogen.

K9: N,N-Bis(3-dimethylaminopropyl)-N-isopropanolamin mit einer OH-Zahl von 229 mg KOH/g wurde von der Firma Huntsman Corporation bezogen.

K10: N'-(3-(Dimethylamino)propyl)-N,N-dimethyl-1,3-propanediamin wurde von der Firma Huntsman Corporation bezogen.

K11: Eine Mischung aus 15% Bis[(Dimethylamino-methy]phenol und 2,4,6-Tris(dimethylaminomethyl)phenol wurde von der Firma Evonik Industries AG bezogen.

K12: Natrium {N-Methyl[(2-hydroxy-5-nonylphenyl)methyl]amino}acetat in Glycol gelöst wurde von der Firma Evonik Industries AG bezogen.

K13: (Tris-(dimethylaminopropyl)-hydrotriazin) wurde von der Firma Evonik Industries AG bezogen.

Polyethylenglycol (PEG) 400 wurde mit einer Reinheit von > 99 Gew.-% von der Fa. ACROS bezogen.

Das Entformungsmittel INT- 1940 RTM wurde von der Firma Axel Plastics Research Laboratories, INC. Erworben und ist laut Datenblatt eine Mischung aus organischen Fettsäuren und Estern.

Alle Rohstoffe mit Ausnahme der Katalysatoren wurden vor Verwendung im Vakuum entgast, das Polyethylenglycol zusätzlich getrocknet.

### Herstellung der Reaktionsmischung

Die Reaktionsmischung wurde, wenn nicht anders angegeben, durch Vermischen von Polyisocyanat (A1-A4) mit einer entsprechenden Menge Katalysator (K1-K14) und Additiv bei 23 °C in einem Speedmixer DAC 150.1 FVZ der Fa. Hauschild bei 2750 min⁻¹ hergestellt. Diese wurde dann ohne weitere Behandlung zur Vernetzung in eine geeignete Form gegossen und ausgehärtet oder ohne weitere Behandlung für die Pultrusion verwendet.

### Durchführung der Pultrusionsversuche

Für die Durchführung der Pultrusionsversuche wurde eine Anlage Pultrex Px 500-10 t der Firma Pultrex verwendet. Die Faserbündel lagen in Rollen auf einem Ständer vor und wurden zunächst durch eine Faservorsortierung/Orientierung (Lochplatte) gezogen, dann mittels eines offenen Tauchbades mit Umlenkung und Abstreifern, oder einer Injektionsbox mit Harz bei Raumtemperatur getränkt und anschließend in das erhitzte Werkzeug (Profilblock) eingezogen. Das Werkzeug hatte eine Länge von 1000 mm, über die sich 4 nacheinander geschaltete, gleichgroße Heizzonen verteilten (H1 bis H4, H1 am Glasfasereinzug). Danach folgte eine luftgekühlte Abkühlungsstrecke von 5 m, an der sich die beiden Puller anschlossen. Diese arbeiteten entsprechend versetzt, so dass eine kontinuierliche Zugkraft an dem Profil anlag und dieses in Richtung Säge transportierte, die nach den Pullern kam und das Profil auf die gewünschte Länge schnitt. Der Profilquerschnitt war ein Rechteck mit den Abmessungen 120 mm × 3 mm. Bei Verwendung eines Tauchbades zur Benetzung der Fasern wurde das abgestriffene, überschüssige Harz in das Bad zurückgeführt und wieder verwendet.

### Ausführungsbeispiel 1

Es wurde eine Harzmischung aus Polyisocyanat A1 (4,86 kg), Katalysator K1 (0,01 kg), Zinkstearat (0,03 kg) und INT-1940RTM (0,10 kg) wie oben beschrieben hergestellt. Die Glasfaserbündel (128 rovings) wurden orientiert und in die Injektionsbox geleitet, welche mit dem Werkzeug fest verbunden war und über eine Fensteröffnung an der Oberseite der Box mit der Harzmischung gefüllt wurde. Die so mit Harz getränkten Glasfasern wurden direkt in das beheizte Werkzeug eingezogen. Die Temperaturzonen waren H1 = 180 °C, H2 = 220 °C, H3 = 200 °C und H4 = 180 °C. Die Zuggeschwindigkeit betrug 0,3 m/min. Die Abzugskräfte lagen bei 0,3 t. Es wurden 8 m Profil hergestellt. Die weiteren Messergebnisse sind in Tabelle 3 zusammengefasst.

### Ausführungsbeispiele 2 - 13

Die in Tabelle 1 angegebenen Mengen von Polyisocyanat, Katalysator und ggf. Additiv wurden laut der o.g. Herstellvorschrift für Reaktionsmischungen behandelt. Die Aushärtung im Ofen wurde nach den ebenfalls in **Fehler! Verweisquelle konnte nicht gefunden werden.** aufgeführten Zeiten und Temperaturen durchgeführt.

Die T_{g} der ausgehärteten Reaktionsmischungen betrug 78 - 154 °C. Die Viskositäten der erfindungsgemäßen Reaktionsmischungen mit Polyisocyanat A1 (Beispiele 2, 3 und 4) betrugen direkt nach der Herstellung 1.58 - 1.61 Pa·s und stieg innerhalb von 4 h auf 1.65 - 1.77 Pa·s an. Die Viskosität mit Polyisocyanat A3 (Beispiel 12) betrug direkt nach der Herstellung 10.4 Pa·s und stieg innerhalb von 4 h auf 10.6 Pa·s an. Die Viskosität mit Polyisocyanat A4 (Beispiel 13) betrug direkt nach der Herstellung 23.0 Pa·s und stieg innerhalb von 4 h auf 24.1 Pa·s an

Die Ausführungsbeispiele 2 und 3 zeigen, dass verschiedene Katalysatoren entsprechend Formel (I) zur Aushärtung von Isocyanaten genutzt werden können. Die erfindungsgemäßen Beispiele 4 bis 7 zeigen, dass unterschiedlichen Mengen Katalysator auch bei niedrigeren Aushärtungstemperaturen zur Polymerisation führen können. Durch die Ausführungsbeispiele 9 bis 11 zeigt sich, dass keine Additive notwendig ist, allerdings verschiedene Additive toleriert werden. Durch die erfindungsgemäßen Beispiele 12 und 13 konnte die effektive Katalyse auch an weiteren Isocyanaten gezeigt werden.

### Vergleichsbeispiele 14 - 24

Die in Tabelle 1 angegebenen Mengen von Polyisocyanat, Katalysator und ggf. Additiv wurden laut der o.g. Herstellvorschrift für Reaktionsmischungen behandelt.

Die Vergleichsbeispiele zeigen, dass verschiede andere aminbasierte Katalysatoren unter denselben Aushärtungsbedingungen wie die erfindungsgemäßen Beispiele nicht zu festen Materialien führen.

### Illustrative Beispiele 25 - 33 zur Identifizierung weiterer geeigneter zur Herstellung von Addukten geeigneter Verbindungen

Die katalytische Aktivität der Verbindungen wurde mit n-Hexylisocyanat als Modellsubstrat bestimmt. Das mengenmäßig bedeutsamste Reaktionsprodukt war ein Trimer. Die Reaktion der NCO-Gruppe wurde durch ¹³C-NMR bei 100 MHz nachgewiesen. Als Lösemittel für die Proben diente Deuterochloroform und dessen nicht deuterierter Anteil als interner Standard.

Getestet wurden die Verbindungen K14 bis K16.

K14: 3-(Dimethylamino)-propanol

K15: 4-(Dimethylamino)-butanol

K16: 5-(Dimethylamino)-pentanol

n-Hexylisocyanat wurde jeweils mit den in der nachfolgenden Tabelle 2 angegebenen Konzentrationen der Verbindungen K14, K15 bzw. K6 versetzt. Die Inkubation erfolgte unter den angegebenen Bedingungen.

**Tabelle 2**

| Versuch | Verbindung | Reaktionsparameter | Ergebnis |
|---|---|---|---|
| 29 | 3-(Dimethylamino)-propanol | 80 °C für 2 h, 20 mol-% | Trimerisierung nachweisbar, aber NCO-Restgehalt |
| 30 | 3-(Dimethylamino)-propanol | 150 °C für 5 min, 20 mol-% | Trimerisierung nachweisbar, aber NCO-Restgehalt |
| 31 | 3-(Dimethylamino)-propanol | 150 °C für 5 min, 0,5 mol-% | Keine Reaktion nachweisbar |
| 32 | 4-(Dimethylamino)-butanol | 80 °C für 2 h, 20 mol-% | Vollständige Reaktion der NCO-Gruppen |
| 33 | 4-(Dimethylamino)-butanol | 150 °C für 5 min, 20 mol-% | Vollständige Reaktion der NCO-Gruppen |
| 34 | 4-(Dimethylamino)-butanol | 150 °C für 5 min, 0,5 mol-% | Vollständige Reaktion der NCO-Gruppen |
| 35 | 5-(Dimethylamino)-pentanol | 80 °C, 2 h, 20 mol-% | Keine Reaktion nachweisbar |
| 36 | 5-(Dimethylamino)-pentanol | 150 °C, 5 min, 20 mol-% | Vollständige Reaktion der NCO-Gruppen |
| 37 | 5-(Dimethylamino)-pentanol | 150 °C, 5 min, 0,5 mol-% | Kein Reaktion nachweisbar |

Der Versuch zeigt, dass als Rest R⁵ auch Alkylenreste ohne Heteroatome in Frage kommen, soweit sie 3 bis 5 Kohlenstoffatome enthalten. Optimal sind Reste R⁵ aus 4 Kohlenstoffatomen. Entsprechende Verbindungen sind natürlich auch geeignete Ausgangsstoffe für die Herstellung der erfindungsgemäßen Addukte.

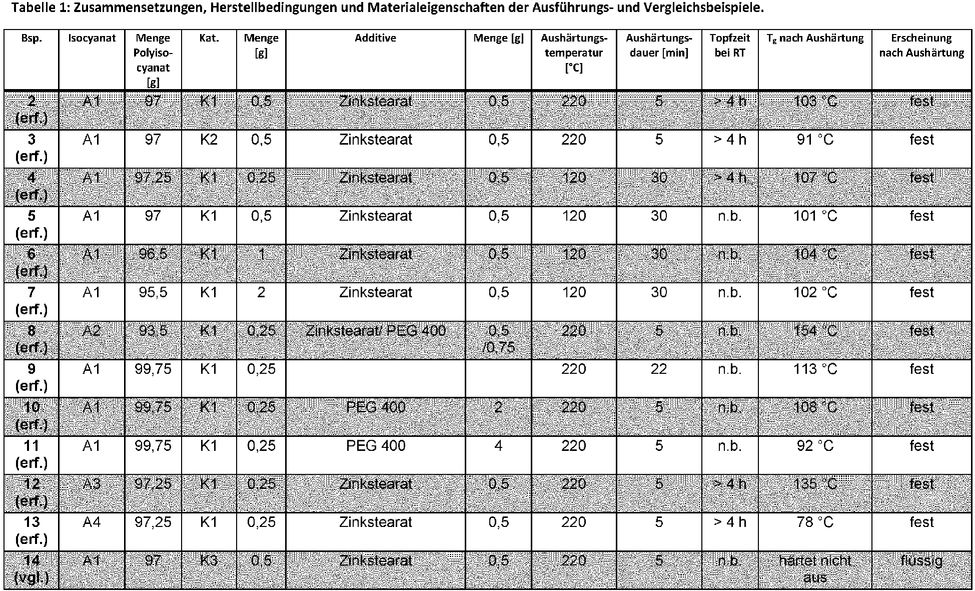

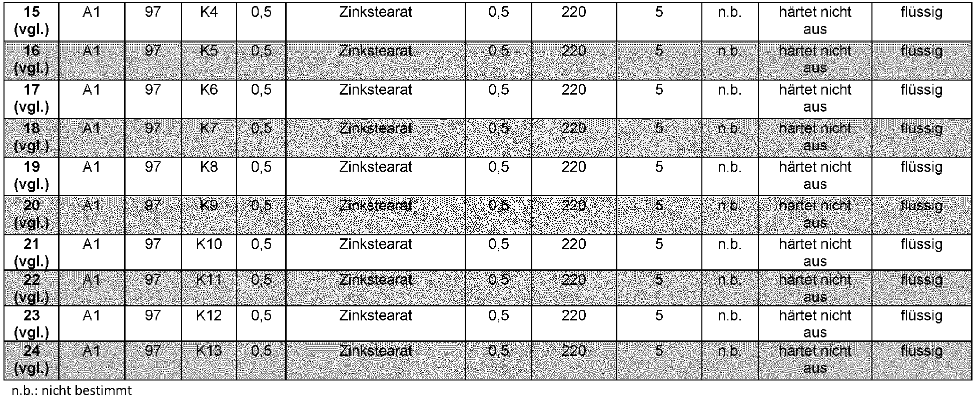

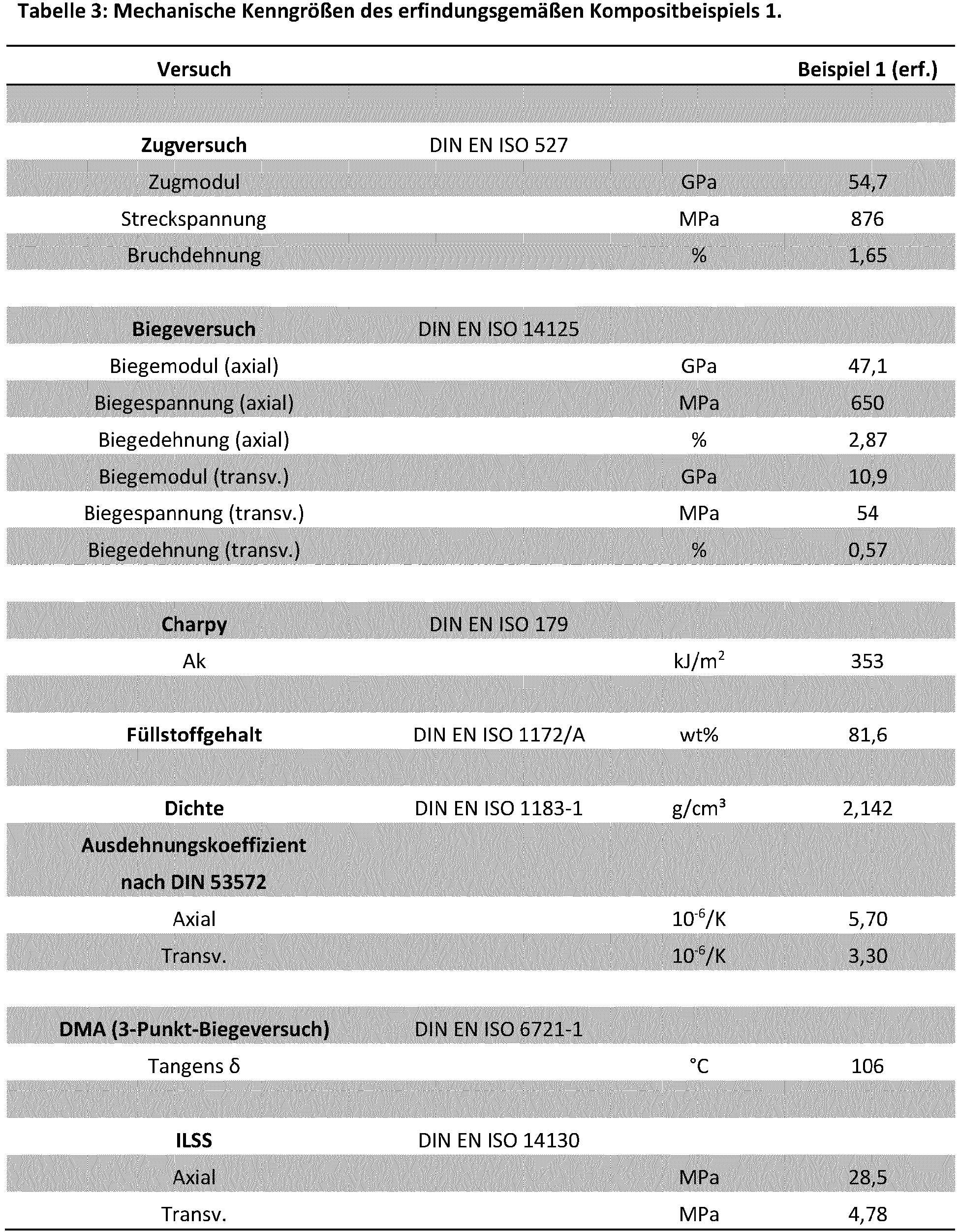

## Patentansprüche

1. Polymerisierbare Zusammensetzung enthaltend
a) wenigstens ein Polyisocyanat mit Isocyanatgruppen ausgewählt aus der Gruppe bestehend aus aliphatisch, cycloaliphatisch, araliphatisch und aromatisch gebundenen Isocyanatgruppen; und
b) wenigstens eine Verbindung gemäß Formel (I) 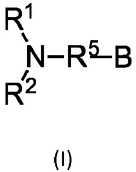
Wobei R¹ und R² unabhängig voneinander ausgewählt sind aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl;
R⁵ ausgewählt ist aus der Gruppe bestehend aus Propylen, Butylen, Pentylen und einem Rest gemäß Formel (II), bevorzugt aus Butylen und dem Rest gemäß Formel (II); 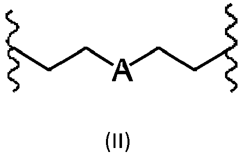
Wobei A in Formel (II) ausgewählt ist aus der Gruppe bestehend aus O, S und NR³, wobei R³ ausgewählt ist aus der Gruppe bestehend aus Wasserstoff, Methyl, Ethyl, Propyl, Isopropyl, Butyl und Isobutyl; und
B unabhängig von A ausgewählt ist aus der Gruppe bestehend aus OH, SH NHR⁴ und NH₂, wobei R⁴ ausgewählt ist aus der Gruppe bestehend aus Methyl, Ethyl und Propyl;
wobei das Verhältnis von Isocyanatgruppen zu mit Isocyanatgruppen reaktiven Gruppen in der polymerisierbaren Zusammensetzung wenigstens 2:1 beträgt und wenigstens 80 % der in der polymerisierbaren Zusammensetzung enthaltenen Isocyanatgruppen aliphatisch, cycloaliphatisch oder araliphatisch gebunden sind; und
N,N,N'-Trimethylaminoethyl-ethanolamin vom Schutzbereich der Patentansprüche ausgeschlossen ist.

2. Die polymerisierbare Zusammensetzung nach Anspruch 1, wobei in Formel (II) A NR³ ist, und R³ ausgewählt ist aus der Gruppe bestehend aus Wasserstoff, Methyl, Ethyl, Propyl, Isopropyl, Butyl und Isobutyl.

3. Die polymerisierbare Zusammensetzung nach Anspruch 2, wobei R¹, R² und R³ Methyl sind und B OH ist.

4. Die polymerisierbare Zusammensetzung nach Anspruch 1, wobei in Formel (II) A Sauerstoff ist.

5. Die polymerisierbare Zusammensetzung nach Anspruch 4, wobei R¹und R² Methyl sind, und B OH ist.

6. Die polymerisierbare Zusammensetzung nach Anspruch 1, wobei in Formel (I) R⁵ Butylen ist.

7. Verwendung einer Verbindung gemäß Formel (I) wie in einem der Ansprüche 1 bis 6 definiert als Katalysator zur Vernetzung von wenigstens zwei aliphatisch und/oder cycloaliphatisch gebundenen Isocyanatgruppen.

8. Die Verwendung gemäß Anspruch 7, wobei die Verwendung zu einem hochvernetzten Polymer führt.

9. Die Verwendung gemäß Anspruch 7 oder 8, wobei wenigstens ein Polyisocyanat ausgewählt aus der Gruppe bestehend aus HDI, PDI, IPDI, H12MDI, oligomerisiertem HDI, oligomerisiertem PDI, oligomerisiertem H12MDI und oligomerisiertem IPDI eingesetzt wird.

10. Kit enthaltend
a) wenigstens ein Polyisocyanat mit Isocyanatgruppen ausgewählt aus der Gruppe bestehend aus aliphatisch, cycloaliphatisch, araliphatisch und aromatisch gebundenen Isocyanatgruppen und
b) wenigstens eine Verbindung gemäß Formel (I) wie in einem der Ansprüche 1 bis 6 definiert.

11. Verfahren zur Herstellung eines Polymers enthaltend die Schritte
a) Vermischen wenigstens eines Polyisocyanats mit Isocyanatgruppen ausgewählt aus der Gruppe bestehend aus aliphatisch, cycloaliphatisch, araliphatisch und aromatisch gebundenen Isocyanatgruppen mit einer Verbindung gemäß Formel (I) wie in einem der Ansprüche 1 bis 6 definiert; und
b) Aushärten der in Verfahrensschritt a) erhaltenen polymerisierbaren Zusammensetzung durch Erhöhung der Temperatur auf wenigstens 50 °C;
wobei zu Beginn des Verfahrensschritts b) das Verhältnis von Isocyanatgruppen zu mit Isocyanat reaktiven Gruppen in der polymerisierbaren Zusammensetzung wenigstens 2:1 beträgt und wenigstens 80 % der in der polymerisierbaren Zusammensetzung enthaltenen Isocyanatgruppen aliphatisch und/oder cycloaliphatisch gebunden sind.

12. Das Verfahren nach Anspruch 11, wobei zwischen dem Ende des Verfahrensschritts a) und dem Beginn des Verfahrensschritts b) ein Zeitraum von wenigstens 30 Minuten liegt.

13. Das Verfahren nach Anspruch 11 oder 12, **dadurch gekennzeichnet, dass** das in Verfahrensschritt a) erhaltene Reaktionsgemisch vor Durchführung des Verfahrensschritts b) mit einem organischen oder anorganischen Füllstoff vermischt wird.

14. Das Verfahren nach Anspruch 13, **dadurch gekennzeichnet, dass** der organische oder anorganische Füllstoff aus Fasern mit einer Mindestlänge von 50 m besteht und die Aushärtung in Verfahrensschritt b) in einem beheizten Werkzeug stattfindet, das dem mit dem Reaktionsgemisch benetzten Faserbündel ein Profil verleiht und dieses Profil durch die Aushärtung des Reaktionsgemisches stabilisiert.

15. Ein Polymer, erhältlich durch das Verfahren gemäß Anspruch 11 oder 12 oder ein Verbundwerkstoff, erhältlich nach dem Verfahren gemäß Anspruch 13 oder 14.

## Claims

1. Polymerizable composition containing
a) at least one polyisocyanate having isocyanate groups selected from the group consisting of aliphatically, cycloaliphatically, araliphatically and aromatically bonded isocyanate groups; and
b) at least one compound of formula (I) 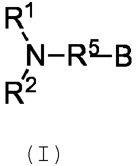
wherein R¹ and R² are independently of one another selected from the group consisting of hydrogen, methyl, ethyl, propyl, isopropyl, butyl, isobutyl, branched C5-alkyl, unbranched C5-alkyl, branched C6-alkyl, unbranched C6-alkyl, branched C7-alkyl and unbranched C7-alkyl;
R⁵ is selected from the group consisting of propylene, butylene, pentylene and a radical of formula (II), preferably from butylene and the radical of formula (II); 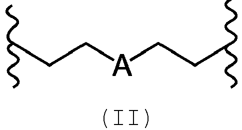
wherein A in formula (II) is selected from the group consisting of O, S and NR³, wherein R³ is selected from the group consisting of hydrogen, methyl, ethyl, propyl, isopropyl, butyl and isobutyl; and
B is independently of A selected from the group consisting of OH, SH NHR⁴ and NH₂, wherein R⁴ is selected from the group consisting of methyl, ethyl and propyl;
wherein the ratio of isocyanate groups to isocyanate-reactive groups in the polymerizable composition is at least 2:1 and at least 80% of the isocyanate groups present in the polymerizable composition are aliphatically, cycloaliphatically or araliphatically bonded and N, N, N'-trimethylaminoethylethanolamine is excluded from the scope of protection of the claims.

2. Polymerizable composition according to Claim 1, wherein in formula (II) A is NR³ and R³ is selected from the group consisting of hydrogen, methyl, ethyl, propyl, isopropyl, butyl and isobutyl.

3. Polymerizable composition according to Claim 2, wherein R¹, R² and R³ are methyl and B is OH.

4. Polymerizable composition according to Claim 1, wherein in formula (II) A is oxygen.

5. Polymerizable composition according to Claim 4, wherein R¹ and R² are methyl and B is OH.

6. Polymerizable composition according to Claim 1, wherein in formula (I) R⁵ is butylene.

7. Use of a compound of formula (I) as defined in any of Claims 1 to 6 as a catalyst for crosslinking of at least two aliphatically and/or cycloaliphatically bonded isocyanate groups.

8. Use according to Claim 7, wherein the use results in a highly crosslinked polymer.

9. Use according to Claim 7 or 8, wherein at least one polyisocyanate selected from the group consisting of HDI, PDI, IPDI, H12MDI, oligomerized HDI, oligomerized PDI, oligomerized H12MDI and oligomerized IPDI is employed.

10. Kit containing
a) at least one polyisocyanate having isocyanate groups selected from the group consisting of aliphatically, cycloaliphatically, araliphatically and aromatically bonded isocyanate groups and
b) at least one compound of formula (I) as defined in any of Claims 1 to 6.

11. Process for producing a polymer containing the steps of
a) mixing at least one polyisocyanate having isocyanate groups selected from the group consisting of aliphatically, cycloaliphatically, araliphatically and aromatically bonded isocyanate groups with a compound of formula (I) as defined in any of Claims 1 to 6; and
b) curing the polymerizable composition obtained in process step a) by raising the temperature to at least 50°C,
wherein at commencement of process step b) the ratio of isocyanate groups to isocyanate-reactive groups in the polymerizable composition is at least 2:1 and at least 80% of the isocyanate groups present in the polymerizable composition are aliphatically and/or cycloaliphatically bonded.

12. Process according to Claim 11, wherein a period of at least 30 minutes elapses between the end of process step a) and commencement of process step b).

13. Process according to Claim 11 or 12, **characterized in that** the reaction mixture obtained in process step a) is mixed with an organic or inorganic filler before performance of process step b).

14. Process according to Claim 13, **characterized in that** the organic or inorganic filler consists of fibres having a minimum length of 50 m and the curing in process step b) is carried out in a heated mould which imparts the fibre bundle wetted with the reaction mixture with a profile and stabilizes this profile through curing of the reaction mixture.

15. Polymer obtainable by the process according to Claim 11 or 12 or a composite material obtainable by the process according to Claim 13 or 14.

## Revendications

1. Composition polymérisable, contenant
a) au moins un polyisocyanate présentant des groupes isocyanate choisis dans le groupe constitué par les groupes isocyanate liés de manière aliphatique, cycloaliphatique, araliphatique et aromatique ; et
b) au moins un composé selon la formule (I) 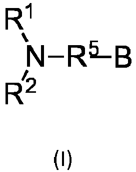 dans laquelle
R¹ et R² sont choisis, indépendamment l'un de l'autre, dans le groupe constitué par hydrogène, méthyle, éthyle, propyle, isopropyle, butyle, isobutyle, C5-alkyle ramifié, C5-alkyle non ramifié, C6-alkyle ramifié, C6-alkyle non ramifié, C7-alkyle ramifié et C7-alkyle non ramifié ;
R⁵ est choisi dans le groupe constitué par propylène, butylène, pentylène et un radical selon la formule (II), de préférence parmi butylène et le radical selon la formule (II) ; 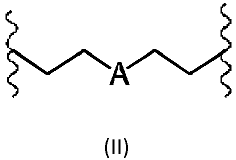
dans laquelle
A dans la formule (II) est choisi dans le groupe constitué par O, S et NR³, R³ étant choisi dans le groupe constitué par hydrogène, méthyle, éthyle, propyle, isopropyle, butyle et isobutyle ; et
B est choisi, indépendamment de A, dans le groupe constitué par OH, SH et NHR⁴ et NH₂, R⁴ étant choisi dans le groupe constitué par méthyle, éthyle et propyle ;
le rapport des groupes isocyanate aux groupes réactifs vis-à-vis d'isocyanate dans la composition polymère valant au moins 2:1 et au moins 80% des groupes isocyanate contenus dans la composition polymérisable étant liés de manière aliphatique, cycloaliphatique ou araliphatique ; et la N,N,N'-triméthylaminoéthyléthanolamine étant exclue de la portée de protection des revendications.

2. Composition polymérisable selon la revendication 1, dans laquelle, dans la formule (II), A représente NR³ et R³ est choisi dans le groupe constitué par hydrogène, méthyle, éthyle, propyle, isopropyle, butyle et isobutyle.

3. Composition polymérisable selon la revendication 2, R¹, R² et R³ représentant méthyle et B représentant OH.

4. Composition polymérisable selon la revendication 1, dans laquelle, dans la formule (II), A représente oxygène.

5. Composition polymérisable selon la revendication 4, R¹ et R² représentant méthyle et B représentant OH.

6. Composition polymérisable selon la revendication 1, dans laquelle, dans la formule (I), R⁵ représente butylène.

7. Utilisation d'un composé selon la formule (I) telle que définie dans l'une des revendications 1 à 6 comme catalyseur de réticulation d'au moins deux groupes isocyanate liés de manière aliphatique et/ou cycloaliphatique.

8. Utilisation selon la revendication 7, l'utilisation conduisant à un polymère hautement réticulé.

9. Utilisation selon la revendication 7 ou 8, au moins un polyisocyanate choisi dans le groupe constitué par HDI, PDI, IPDI, H12MDI, HDI oligomérisé, PDI oligomérisé, H12MDI oligomérisé et IPDI oligomérisé étant utilisé.

10. Kit contenant
a) au moins un polyisocyanate présentant des groupes isocyanate choisis dans le groupe constitué par les groupes isocyanate liés de manière aliphatique, cycloaliphatique, araliphatique et aromatique et
b) au moins un composé selon la formule (I) telle que définie dans l'une des revendications 1 à 6.

11. Procédé pour la préparation d'un polymère, comprenant les étapes
a) mélange d'au moins un polyisocyanate présentant des groupes isocyanate choisis dans le groupe constitué par les groupes isocyanate liés de manière aliphatique, cycloaliphatique, araliphatique et aromatique avec un composé selon la formule (I) telle que définie dans l'une des revendications 1 à 6 ; et
b) durcissement de la composition polymérisable obtenue dans l'étape de procédé a) par augmentation de la température à au moins 50°C ;
dans lequel, au début de l'étape de procédé b), le rapport des groupes isocyanate aux groupes réactifs vis-à-vis d'isocyanate dans la composition polymère vaut au moins 2:1 et au moins 80% des groupes isocyanate contenus dans la composition polymérisable sont liés de manière aliphatique et/ou cycloaliphatique.

12. Procédé selon la revendication 11, une période de temps d'au moins 30 minutes se trouvant entre la fin de l'étape de procédé a) et le début de l'étape de procédé b) .

13. Procédé selon la revendication 11 ou 12, **caractérisé en ce que** le mélange réactionnel obtenu dans l'étape de procédé a), avant la réalisation de l'étape de procédé b), est mélangé avec une charge organique ou inorganique.

14. Procédé selon la revendication 13, **caractérisé en ce que** la charge organique ou inorganique est constituée par des fibres présentant une longueur minimale de 50 m et le durcissement dans l'étape de procédé b) a lieu dans un outil chauffé qui confère un profil au faisceau de fibres mouillé par le mélange réactionnel et stabilise ce profil par le durcissement du mélange réactionnel.

15. Polymère, pouvant être obtenu par le procédé selon la revendication 11 ou 12 ou matériau composite pouvant être obtenu par le procédé selon la revendication 13 ou 14.
